# EUROPEAN PATENT APPLICATION

(11) **EP 3 002 885 A1**
(43) Date of publication of application: **06.04.2016**
(21) Application number: 13891102.9
(22) Date of filing: 08.08.2013
(51) Int. Cl.: H04B 5/02

(54) **TERMINAL AND INPUT METHOD**

(71) Applicant: Dongguan Yulong Telecommunication Tech Co. Ltd., Dongguan, Guangdong 523808 (CN); Yulong Computer Telecommunication Scientific (Shenzhen) Co. Ltd., Shenzhen, Guangdong 518057 (CN)
(72) Inventor: WANG, Pengtao, Shenzhen Guangdong 518057 (CN)
(74) Representative: DREISS Patentanwälte PartG mbB
(86) International application number: PCT/CN2013/081113
(87) International publication number: WO 2015/018043

(57) **Abstract**

The present invention provides a terminal and an input method, wherein the terminal includes: a state parameter acquisition unit, configured to acquire a state parameter of the terminal; and a control unit, configured to judge whether the terminal satisfies a condition of serving as input equipment or output equipment of other terminals according to the state parameter of the terminal, and if so, establish a connection between the terminal and the other terminals, and the terminal serves as the input equipment or the output equipment to carry out data interaction with the other terminals. By means of the technical solutions of the present invention, the terminal can determine to serve as the input equipment or the output equipment of the other terminals according to the state parameter per se, the control accuracy of the terminal is ensured, and thus the input efficiency on the terminal is improved. (Fig. 1)

## Description

### Field of the Invention

The present invention relates to the technical field of communications, and specifically relates to a terminal and an input method.

### Background of the Invention

At present, most of the mobile phones and other mobile terminals are touch screens, and input method keyboards, edit boxes and other contents are displayed on the same screen. For terminals with smaller screens, due to the limited areas of the touch screens, users are liable to make input errors resulting from inaccurate touch, and moreover, the displayed contents are not clear. For terminals with larger screens, one-hand operation is unlikely to carry out, and in an input process, users need to hold the terminals on one hand and input by the other hand, which influences the input efficiency. No relevant solution is available to solve this technical problem currently.

### Summary of the Invention

Based on at least one of the above-mentioned technical solutions, the present invention provides a new input solution, which enables a terminal to determine to serve as input equipment or output equipment of other terminals according to a state parameter per se and ensures the control accuracy of the terminal, thereby improving the input efficiency on the terminal.

In view of this, the present invention provides a terminal, including: a state parameter acquisition unit, configured to acquire a state parameter of the terminal; and a control unit, configured to judge whether the terminal satisfies a condition of serving as input equipment or output equipment of other terminals according to the state parameter of the terminal, and if so, establish a connection between the terminal and the other terminals, and the terminal serves as the input equipment or the output equipment to carry out data interaction with the other terminals.

By acquiring the state parameter of the terminal, the terminal can automatically distribute the role (namely, serving as the input equipment or output equipment of other terminals) according to the state parameter per se, and thus the complex operation of manually setting the terminal role of a user can be avoided.

When the state parameter of the terminal satisfies the condition of serving as the input equipment or output equipment of other terminals, a connection request is sent to other terminals to avoid blind connection between the terminals, the connection between the terminals is only requested to be established only if necessary, and once corresponding conditions are satisfied, the connection is automatically established without any operation of the user, so that the matching process is more intelligent and the operation is more convenient.

After the connection between the terminals is established, the terminal serves as the input equipment or output equipment of other terminals, which solves the problem of inconvenient touch or unclear display resulting from a too small or too large screen of the terminal (when the screen is too small, inaccurate touch and unclear display are liable to induce, and when the screen is too large, one-hand operation is inconvenient for the input), so that the operation of the user is facilitated, the input efficiency is improved and the display effect is improved as well. When detecting that the state parameter satisfies the condition, the terminal can also pop up a window or prompt the user to determine whether serving the terminal as the input equipment of other terminals or serving other terminals as the input equipment of the terminal in other manners, so as to avoid misoperation. The terminal serving as the input equipment can be a terminal with a display screen, for example, a mobile phone, a PC or the like, and can also be a terminal without a display screen, for example, a keyboard, a gamepad or the like.

It should be understood that, the terminal and the other terminals in the embodiment can be two terminals and can also be a plurality of terminals. The terminals carry out data transmission in multiple manners, for example, such wireless transmission manners as near field communication (NFC), Bluetooth, WIFI, infrared and the like can be adopted, in the present embodiment, the data transmission between the terminals is preferably carried out through the near field communication, when two terminals approach to each other, and if the terminal judges that the condition of serving as the input equipment or output equipment of other terminals is satisfied, the data transmission between the terminals can be carried out through the near field communication.

In the above-mentioned technical solution, preferably, the control unit is further configured to, when receiving the connection request of the other terminals, judge whether the terminal satisfies the condition of serving as the input equipment or output equipment of the other terminals according to the state parameter of the terminal, and if so, send a response instruction to the other terminals to establish the connection between the terminal and the other terminals.

In the technical solution, the terminal can not only send the connection request to the other terminals, but also can receive the connection request from the other terminals and send the response instruction to the terminals sending the connection request when judging that the state parameter per se can establish a connection relationship with the terminals sending the connection request, so as to establish the connection relation with the other terminals, in this way, even if the other terminals initiate the connection request, if the terminal does not satisfy corresponding state parameter, namely, the state parameters of the two terminals are not matched, the connection between the two terminals still cannot be successfully established, only when one of the requested terminal and the request terminal can serve as the input equipment and the other can serve as the output equipment, the connection between the two terminals can be established, and when a function of automatically establishing the connection between the two terminals is provided, the successful connection establishment condition is also limited to improve the intelligence of the terminal.

In the above-mentioned technical solution, preferably, the control unit determines the terminal to serve as the input equipment of the other terminals when the state parameter of the terminal satisfies a first preset condition, and determines the terminal to serve as the output equipment of the other terminals when the state parameter of the terminal satisfies a second preset condition.

In the technical solution, the preset condition is a preset state parameter of the terminal, for example, the first preset condition can be that the terminal is placed horizontally, and the second preset condition can be that the terminal is placed vertically. Specifically, the terminal can be provided with a gravity coordinate system, the parameter conditions of gravity components in various coordinate directions at the horizontal placement state of the terminal are used as the first preset condition, similarly, the parameter conditions of gravity components in various coordinate directions at the vertical placement state of the terminal are used as the second preset condition, if the gravity state parameter of the current terminal satisfies the first preset condition, it indicates that the terminal is horizontally placed, and similarly, if the gravity state parameter of the current terminal satisfies the second preset condition, it indicates that the terminal is vertically placed.

Preferably, when the state parameters of the two terminals satisfy the first preset condition and the second preset condition respectively, the two terminals can be deemed as matched terminals, one terminal is used as an extended screen of the other terminal, the other terminal is used as extended input equipment of one terminal, and by judging the state parameters of the two terminals, the judgment of one terminal serving as the input equipment of the other terminal is more accurate. Further, after determining one terminal to serve as the input equipment of the other terminal, if the other terminal does not open an edit interface, then the terminal serving as the input equipment can continue to process the real-time process per se, halt to process the real-time process when receiving an edit command sent by the other terminal to carry out corresponding input operation, and continue to process the foregoing real-time process after finishing the input operation.

In the above-mentioned technical solution, preferably, the control unit is further configured to, after the terminal establishes the connection with the other terminals, if detecting that the state parameter of the terminal does not satisfy the first preset condition or the second preset condition, disconnect the connection between the terminal and the other terminals.

The state parameter of the terminal is detected in real time, and the connection between the terminals is disconnected in the case that the state parameter does not satisfy the preset condition, so that the user can change the state of the terminal to make the terminal automatically disconnect the connection after inputting, and the user does not need to manually set to disconnect the connection, and thus the operation of the user is facilitated. Of course, when the state parameter of the terminal changes greatly, the user can also be prompted of the change of the state parameter of the terminal, and if the user does not need to disconnect the connection, the user can adjust the state of the terminal to keep the connection between the terminals, so as to avoid connection interruption caused by misoperation of influencing the input of the user.

In the above-mentioned technical solution, preferably, the state parameter includes a gravity parameter of the terminal.

In the technical solution, the terminal serving as the input equipment can be determined by detecting the gravity parameter of the terminal. Specifically, when the terminal is placed in different manners, the gravity coordinate thereof is different, so that the terminal serving as the input equipment can be determined by detecting the gravity coordinate, for example, the horizontally placed terminal is used as the input equipment of the terminal with an upright vertical screen (or an upright horizontal screen).

In the above-mentioned technical solution, preferably, the control unit includes: a judging subunit, configured to judge whether the distance between the terminal and the other terminals is smaller than or equal to a preset distance, and if so, notify the state parameter acquisition unit to acquire the state parameter of the terminal.

In the technical solution, the distance between the terminals is detected, and when the distance between the terminals is smaller than or equal to the preset distance, the state parameter of the terminal is acquired, in order to send the connection request when the state parameter satisfies the preset condition (the first preset condition or the second preset condition), which ensures the terminal to automatically acquire the state parameter when satisfying a certain distance, and the complex operation of the user for manually opening a state acquisition module and selecting and acquiring the state parameter of the terminal is not needed, so that the terminal masters the opportunity of acquiring the state parameter more accurately, and the operation of the user is facilitated. For example, the user sets to acquire the state parameter of the terminal when the distance between the terminals is within 5cm, then when detecting that the distance between two terminals is smaller than or equal to 5cm, the terminal automatically opens the state acquisition module to acquire the state parameter of the terminal, so as to judge whether the terminal satisfies the condition.

In the above-mentioned technical solution, preferably, the control unit is further configured to send the connection request to the other terminals, when determining that the terminal can serve as the output equipment of the other terminals according to the state parameter of the terminal and the terminal starts an application needing to carry out input operation.

In the technical solution, when judging that the state parameter of the terminal satisfies the condition of serving as the output equipment of other terminals and the terminal starts the application needing to carry out the input operation, the connection request is sent to the other terminals, so that the terminal can judge the opportunity of sending the connection request more accurately, in order to prevent the terminal from sending the connection request to the other terminals for multiple times to cause electricity loss of the terminal, when needing not to carry out the input operation, namely, needing not to serve the other terminals as the input equipment.

In the above-mentioned technical solution, preferably, the control unit is further configured to, after the terminal establishes the connection with the other terminals, and when the terminal serves as the output equipment, if the terminal starts the application needing to carry out the input operation, send a control command to the other terminals to enable the other terminals to start an input method application after receiving the control command, and when the terminal serves as the input equipment, start the input method application according to the control command of the other terminals; the terminal further includes: a display unit, configured to display an edit interface in full screen and display input data from the other terminals in the edit interface when the terminal serves as the output equipment, and display an input method interface in full screen when the terminal serves as the input equipment.

In two matched terminals which have established the connection, if needing to carry out the input operation, the terminal serving as the output equipment sends the control command to the terminal serving as the input equipment, and after receiving the control command, the terminal serving as the input equipment starts the input method application for inputting. If the terminal serving as the input equipment is provided with a display screen, the terminal serving as the input equipment can display the input method interface on the display screen in full screen, for enabling the user to touch a corresponding input identifier.

The terminal sending the control command can display the current application in full screen, and since the input method interface is not displayed, more contents can be displayed on the current interface to enable the user to control the input contents and the application contents. When displaying the current application in full screen, the attribute of the interface can be readjusted to obtain a better display effect, the current interface can also be directly amplified in a preset proportion, and the input method interface can also be not included before directly displaying the input method interface without processing the same.

In the above-mentioned technical solution, preferably, the control unit is further configured to, after the terminal establishes the connection with the other terminals, and when the terminal serves as the output equipment, if the terminal starts the application needing to carry out the input operation, send an input control data packet in the started application to the other terminals to enable the other terminals to start an input control interface corresponding to the started application in full screen according to the input control data packet; the terminal further includes: a display unit, configured to display an application interface in full screen when the terminal serves as the output equipment, and display an input control interface corresponding to the application started by the other terminals in full screen according to the input control data packet from the other terminal for the input of the user, when the terminal serves as the input equipment.

When the terminal serving as the input equipment in the two terminals is not equipped with a corresponding input program, when the terminal serving as the output equipment needs to carry out the input operation, a corresponding input control data packet can be sent to the terminal serving as the input equipment, for enabling the terminal serving as the input equipment to input according to the received input control data packet. For example, the terminal serving as the output equipment opens a game application, then the input control data packet corresponding to the game application can be sent to the terminal serving as the input equipment, and after receiving the input control data packet, the terminal serving as the input equipment generates and displays a control handle to carry out input control on a game in the other terminal.

According to another aspect of the present invention, an input method is further provided, including: acquiring a state parameter of a terminal; judging whether the terminal satisfies a condition of serving as input equipment or output equipment of other terminals according to the state parameter of the terminal; if so, establishing a connection between the terminal and the other terminals, and the terminal serves as the input equipment or the output equipment to carry out data interaction with the other terminals.

By acquiring the state parameter of the terminal, the terminal can automatically distribute the role (namely, serving as the input equipment or output equipment of other terminals) according to the state parameter per se, and thus the complex operation of manually setting the terminal role of a user is avoided.

When the state parameter of the terminal satisfies the condition of serving as the input equipment or output equipment of other terminals, a connection request is sent to other terminals to avoid blind connection between the terminals, the connection between the terminals is only requested to be established only if necessary, and once corresponding conditions are satisfied, the connection is automatically established without any operation of the user, so that the matching process is more intelligent and the operation is more convenient.

After the connection between the terminals is established, the terminal serves as the input equipment or output equipment of other terminals, which solves the problem of inconvenient touch or unclear display resulting from a too small or too large screen of the terminal (when the screen is too small, inaccurate touch and unclear display are liable to induce, and when the screen is too large, one-hand operation is inconvenient for the input), so that the operation of the user is facilitated, the input efficiency is improved and the display effect is improved as well. When detecting that the state parameter satisfies the condition, the terminal can also pop up a window or prompt the user to determine whether serving the terminal as the input equipment of other terminals or serving other terminals as the input equipment of the terminal in other manners, so as to avoid misoperation. The terminal serving as the input equipment can be a terminal with a display screen, for example, a mobile phone, a PC or the like, and can also be a terminal without a display screen, for example, a keyboard, a gamepad or the like.

It should be understood that, the terminal and the other terminals in the embodiment can be two terminals and can also be a plurality of terminals. The terminals carry out data transmission in multiple manners, for example, such wireless transmission manners as near field communication (NFC), Bluetooth, WIFI, infrared and the like can be adopted, in the present embodiment, the data transmission between the terminals is preferably carried out through the near field communication, when two terminals approach to each other, and if the terminal judges that the condition of serving as the input equipment or output equipment of other terminals is satisfied, the data transmission between the terminals can be carried out through the near field communication.

In the above-mentioned technical solution, preferably, when receiving the connection request from the other terminals, judging whether the terminal satisfies the condition of serving as the input equipment or output equipment of the other terminals according to the state parameter of the terminal; if so, sending a response instruction to the other terminals to establish the connection between the terminal and the other terminals.

In the technical solution, the terminal can not only send the connection request to the other terminals, but also can receive the connection request from the other terminals and send the response instruction to the terminals sending the connection request when judging that the state parameter per se can establish a connection relationship with the terminals sending the connection request, so as to establish the connection relationship with the other terminals, in this way, even if the other terminals initiate the connection request, if the terminal does not satisfy corresponding state parameter, namely, the state parameters of the two terminals are not matched, the connection between the two terminals still cannot be successfully established, only when one of the requested terminal and the request terminal can serve as the input equipment and the other can serve as the output equipment, the connection between the two terminals can be established, and when a function of automatically establishing the connection between the two terminals is provided, the successful connection establishment condition is also limited to improve the intelligence of the terminal.

In the above-mentioned technical solution, preferably, when the state parameter of the terminal satisfies a first preset condition, determining the terminal to serve as the input equipment of the other terminals, and when the state parameter of the terminal satisfies a second preset condition, determining the terminal to serve as the output equipment of the other terminals.

In the technical solution, the preset condition is a preset state parameter of the terminal, for example, the first preset condition can be that the terminal is placed horizontally, and the second preset condition can be that the terminal is placed vertically. Preferably, when the state parameters of the two terminals satisfy the first preset condition and the second preset condition respectively, the two terminals can be deemed as matched terminals, one terminal is used as an extended screen of the other terminal, the other terminal is used as extended input equipment of one terminal, and by judging the state parameters of the two terminals, the judgment of one terminal serving as the input equipment of the other terminal is more accurate. Further, after determining one terminal to serve as the input equipment of the other terminal, if the other terminal does not open an edit interface, then the terminal serving as the input equipment can continue to process the real-time process per se, halt to process the real-time process when receiving an edit command sent by the other terminal to carry out corresponding input operation, and continue to process the foregoing real-time process after finishing the input operation.

In the above-mentioned technical solution, preferably, the input method further includes: after the terminal establishes the connection with the other terminals, if detecting that the state parameter of the terminal does not satisfy the first preset condition or the second preset condition, disconnecting the connection between the terminal and the other terminals.

The state parameter of the terminal is detected in real time, and the connection between the terminals is disconnected in the case that the state parameter does not satisfy the preset condition, so that the user can change the state of the terminal to make the terminal automatically disconnect the connection after inputting, and the user does not need to manually set to disconnect the connection, and thus the operation of the user is facilitated. Of course, when the state parameter of the terminal changes greatly, the user can also be prompted of the change of the state parameter of the terminal, and if the user does not need to disconnect the connection, the user can adjust the state of the terminal to keep the connection between the terminals, so as to avoid connection interruption caused by misoperation of influencing the input of the user.

In the above-mentioned technical solution, preferably, the state parameter includes a gravity parameter of the terminal.

In the technical solution, the terminal serving as the input equipment can be determined by detecting the gravity parameter of the terminal. Specifically, when the terminal is placed in different manners, the gravity coordinate thereof is different, so that the terminal serving as the input equipment can be determined by detecting the gravity coordinate, for example, the horizontally placed terminal is used as the input equipment of the terminal with an upright vertical screen (or an upright horizontal screen).

In the above-mentioned technical solution, preferably, the input method further includes: judging whether the distance between the terminal and the other terminals is smaller than or equal to a preset distance, and if so, acquiring the state parameter of the terminal.

In the technical solution, the distance between the terminals is detected, and when the distance between the terminals is smaller than or equal to the preset distance, the state parameter of the terminal is acquired, in order to send the connection request when the state parameter satisfies the preset condition (the first preset condition or the second preset condition), which ensures the terminal to automatically acquire the state parameter when satisfying a certain distance, and the complex operation of the user for manually opening a state acquisition module and selecting and acquiring the state parameter of the terminal is not needed, so that the terminal masters the opportunity of acquiring the state parameter more accurately, and the operation of the user is facilitated. For example, the user sets to acquire the state parameter of the terminal when the distance between the terminals is within 5cm, then when detecting that the distance between two terminals is smaller than or equal to 5cm, the terminal automatically opens the state acquisition module to acquire the state parameter of the terminal, so as to judge whether the terminal satisfies the condition.

In the above-mentioned technical solution, preferably, when determining that the terminal can serve as the output equipment of the other terminals according to the state parameter of the terminal and the terminal starts an application needing to carry out input operation, sending the connection request to the other terminals.

In the technical solution, when judging that the state parameter of the terminal satisfies the condition of serving as the output equipment of other terminals and the terminal starts the application needing to carry out the input operation, the connection request is sent to the other terminals, so that the terminal can judge the opportunity of sending the connection request more accurately, in order to prevent the terminal from sending the connection request to the other terminals for multiple times to cause electricity loss of the terminal, when needing not to carry out the input operation, namely, needing not to serve the other terminals as the input equipment.

In the above-mentioned technical solution, preferably, the input method further includes: after the terminal establishes the connection with the other terminals, and when the terminal serves as the output equipment, if the terminal starts the application needing to carry out the input operation, sending a control command to the other terminals, displaying an application interface in full screen, and displaying input data from the other terminals in the application interface; when the terminal serves as the input equipment, starting an input method application according to the control command from the other terminals, and displaying an input method interface in full screen.

In two matched terminals which have established the connection, if needing to carry out the input operation, the terminal serving as the output equipment sends the control command to the terminal serving as the input equipment, and after receiving the control command, the terminal serving as the input equipment starts the input method application for inputting. If the terminal serving as the input equipment is provided with a display screen, the terminal serving as the input equipment can display the input method interface on the display screen in full screen, for enabling the user to touch a corresponding input identifier.

The terminal sending the control command can display the current application in full screen, and since the input method interface is not displayed, more contents can be displayed on the current interface to enable the user to control the input contents and the application contents. When displaying the current application in full screen, the attribute of the interface can be readjusted to obtain a better display effect, the current interface can also be directly amplified in a preset proportion, and the input method interface can also be not included before directly displaying the input method interface without processing the same.

In the above-mentioned technical solution, preferably, after the terminal establishes the connection with the other terminals, and when the terminal serves as the output equipment, if the terminal starts the application needing to carry out the input operation, sending an input control data packet in the started application to the other terminals and displaying the application interface in full screen; after the terminal establishes the connection with the other terminals, and when the terminal serves as the input equipment, displaying an input control interface corresponding to the started application in full screen according to the input control data packet from the other terminals, and transmitting the input data of the user to the terminal for displaying.

When the terminal serving as the input equipment in the two terminals is not equipped with a corresponding input program, when the terminal serving as the output equipment needs to carry out the input operation, a corresponding input control data packet can be sent to the terminal serving as the input equipment, for enabling the terminal serving as the input equipment to input according to the received input control data packet. For example, the terminal serving as the output equipment opens a game application, then the input control data packet corresponding to the game application can be sent to the terminal serving as the input equipment, and after receiving the input control data packet, the terminal serving as the input equipment generates and displays a control handle to carry out input control on a game in the other terminal.

According to a further aspect of the present invention, a program product stored on a non-volatile machine readable medium is further provided, which is used for input control. The program product includes a machine executable instruction used for driving a computer system to execute the following steps: acquiring a state parameter of a terminal; judging whether the terminal satisfies a condition of serving as input equipment or output equipment of other terminals according to the state parameter of the terminal; if so, establishing a connection between the terminal and the other terminals, and the terminal serves as the input equipment or the output equipment to carry out data interaction with the other terminals.

According to a further aspect of the present invention, a non-volatile machine readable medium is further provided, which stores a program product used for input control. The program product includes a machine executable instruction used for driving a computer system to execute the following steps: acquiring a state parameter of a terminal; judging whether the terminal satisfies a condition of serving as input equipment or output equipment of other terminals according to the state parameter of the terminal; if so, establishing a connection between the terminal and the other terminals, and the terminal serves as the input equipment or the output equipment to carry out data interaction with the other terminals.

According to a further aspect of the present invention, a machine readable program is further provided, wherein the program is used for driving a machine to execute any input method in the above-mentioned technical solutions.

According to a further aspect of the present invention, a storage medium storing a machine readable program is further provided, wherein the machine readable program is used for driving a machine to execute any input method in the above-mentioned technical solutions.

By means of the above technical solutions, the terminal can determine to serve as the input equipment or the output equipment of the other terminals according to the state parameter per se, the control accuracy of the terminal is ensured, and thus the input efficiency on the terminal is improved.

### Brief Description of the Drawings

Fig. 1 shows a block diagram of a terminal according to an embodiment of the present invention;
Fig. 2 shows a flowchart of an input method according to an embodiment of the present invention;
Fig. 3 shows a flowchart of an input method according to another embodiment of the present invention;
Fig. 4A to Fig. 4C show schematic diagrams of gravity coordinate axis of a terminal according to an embodiment of the present invention;
Fig. 5A to Fig. 5D show schematic diagrams of a display interface of a terminal according to an embodiment of the present invention;

### Detailed Description of the Embodiments

In order to understand the above-mentioned purposes, features and advantages of the present invention more clearly, a further detailed description of the present invention will be given below in combination with the accompanying drawings and embodiments. It should be noted that, the embodiments in the present application and the features in the embodiments can be combined with each other in the case of no conflict.

A large number of specific details are illustrated in the descriptions below to fully understand the present invention, but the present invention can also be implemented in other manners different from the description herein, therefore, the protection scope of the present invention is not limited by the specific embodiments disclosed below.

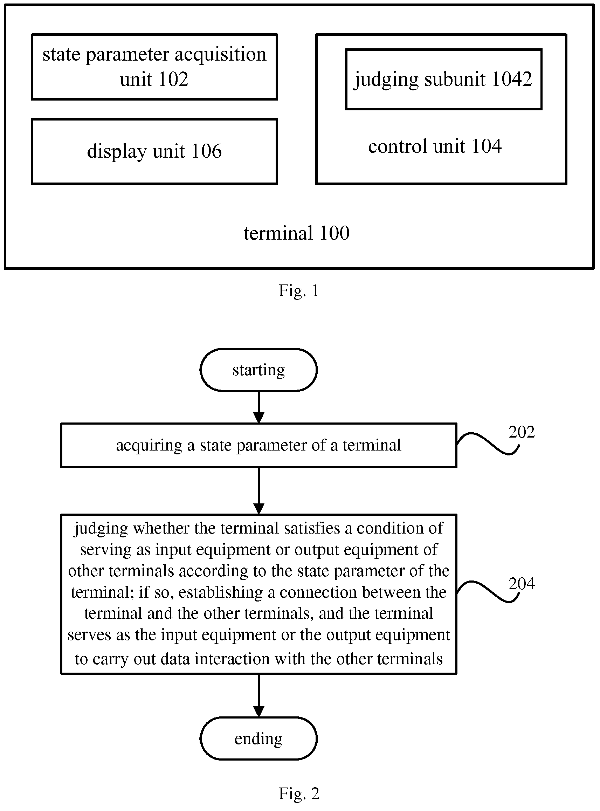

Fig. 1 shows a block diagram of a terminal according to an embodiment of the present invention.

As shown in Fig. 1, the terminal 100 according to the embodiment of the present invention includes: a state parameter acquisition unit 102, configured to acquire a state parameter of the terminal 100; and a control unit 104, configured to judge whether the terminal 100 satisfies a condition of serving as input equipment or output equipment of other terminals according to the state parameter of the terminal 100, and if so, establish a connection between the terminal 100 and the other terminals.

By acquiring the state parameter of the terminal, the terminal can automatically distribute the role (namely, serving as the input equipment or output equipment of other terminals) according to the state parameter per se, and thus the complex operation of manually setting the terminal role of a user is avoided.

When the state parameter of the terminal satisfies the condition of serving as the input equipment or output equipment of other terminals, a connection request is sent to other terminals to avoid blind connection between the terminals, the connection between the terminals is only requested to be established only if necessary, and once corresponding conditions are satisfied, the connection is automatically established without any operation of the user, so that the matching process is more intelligent and the operation is more convenient.

After the connection between the terminals is established, the terminal serves as the input equipment or output equipment of other terminals, which solves the problem of inconvenient touch or unclear display resulting from a too small or too large screen of the terminal (when the screen is too small, inaccurate touch and unclear display are liable to induce, and when the screen is too large, one-hand operation is inconvenient for input), so that the operation of the user is facilitated, the input efficiency is improved and the display effect is improved as well. When detecting that the state parameter satisfies the condition, the terminal can also pop up a window or prompt the user to determine whether serving the terminal as the input equipment of other terminals or serving other terminals as the input equipment of the terminal in other manners, so as to avoid misoperation. The terminal serving as the input equipment can be a terminal with a display screen, for example, a mobile phone, a PC or the like, and can also be a terminal without a display screen, for example, a keyboard, a gamepad or the like.

It should be understood that, the terminal and the other terminals in the embodiment can be two terminals and can also be a plurality of terminals. The terminals carry out data transmission in multiple manners, for example, such wireless transmission manners as near field communication (NFC), Bluetooth, WIFI, infrared and the like can be adopted, in the embodiment, the data transmission between the terminals is preferably carried out through the near field communication, when two terminals approach to each other, and if the terminal judges that the condition of serving as the input equipment or output equipment of other terminals is satisfied, the data transmission between the terminals can be carried out through the near field communication.

In the above-mentioned technical solution, preferably, the control unit 104 is further configured to, when receiving the connection request of the other terminals, judge whether the terminal satisfies the condition of serving as the input equipment or output equipment of the other terminals according to the state parameter of the terminal 100, and if so, send a response instruction to the other terminals to establish the connection between the terminal and the other terminals.

In the technical solution, the terminal can not only send the connection request to the other terminals, but also can receive the connection request from the other terminals and send the response instruction to the terminals sending the connection request when judging that the state parameter per se can establish a connection relationship with the terminals sending the connection request, so as to establish the connection relationship with the other terminals, in this way, even if the other terminals initiate the connection request, if the terminal does not satisfy corresponding state parameter, namely the state parameters of the two terminals are not matched, the connection between the two terminals still cannot be successfully established, only when one of the requested terminal and the request terminal can serve as the input equipment and the other can serve as the output equipment, the connection between the two terminals can be established, and when a function of automatically establishing the connection between the two terminals is provided, the successful connection establishment condition is also limited to improve the intelligence of the terminal.

In the above-mentioned technical solution, preferably, the control unit 104 determines the terminal 100 to serve as the input equipment of the other terminals when the state parameter of the terminal 100 satisfies a first preset condition, and determines the terminal 100 to serve as the output equipment of the other terminals when the state parameter of the terminal 100 satisfies a second preset condition.

In the technical solution, the preset condition is a preset state parameter of the terminal, for example, the first preset condition can be that the terminal is placed horizontally, and the second preset condition can be that the terminal is placed vertically. Specifically, the terminal can be provided with a gravity coordinate system, the parameter conditions of gravity components in various coordinate directions at the horizontal placement state of the terminal are used as the first preset condition, similarly, the parameter conditions of gravity components in various coordinate directions at the vertical placement state of the terminal are used as the second preset condition, if the gravity state parameter of the current terminal satisfies the first preset condition, it indicates that the terminal is horizontally placed, and similarly, if the gravity state parameter of the current terminal satisfies the second preset condition, it indicates that the terminal is vertically placed.

Preferably, when the state parameters of the two terminals satisfy the first preset condition and the second preset condition respectively, the two terminals can be deemed as matched terminals, one terminal is used as an extended screen of the other terminal, the other terminal is used as extended input equipment of one terminal, and by judging the state parameters of the two terminals, the judgment of one terminal serving as the input equipment of the other terminal is more accurate. Further, after determining one terminal to serve as the input equipment of the other terminal, if the other terminal does not open an edit interface, then the terminal serving as the input equipment can continue to process the real-time process per se, halt to process the real-time process when receiving an edit command sent by the other terminal to carry out corresponding input operation, and continue to process the foregoing real-time process after finishing the input operation.

In the above-mentioned technical solution, preferably, the control unit 104 is further configured to, after the terminal 100 establishes the connection with the other terminals, if detecting that the state parameter of the terminal 100 does not satisfy the first preset condition or the second preset condition, disconnect the connection between the terminal 100 and the other terminals.

The state parameter of the terminal is detected in real time, and the connection between the terminals is disconnected in the case that the state parameter does not satisfy the preset condition, so that the user can change the state of the terminal to make the terminal automatically disconnect the connection after inputting, and the user does not need to manually set to disconnect the connection, and thus the operation of the user is facilitated. Of course, when the state parameter of the terminal changes greatly, the user can also be prompted of the change of the state parameter of the terminal, and if the user does not need to disconnect the connection, the user can adjust the state of the terminal to keep the connection between the terminals, so as to avoid connection interruption caused by misoperation of influencing the input of the user.

In the above-mentioned technical solution, preferably, the state parameter includes a gravity parameter of the terminal.

In the technical solution, the terminal serving as the input equipment can be determined by detecting the gravity parameter of the terminal. Specifically, when the terminal is placed in different manners, the gravity coordinate thereof is different, so that the terminal serving as the input equipment can be determined by detecting the gravity coordinate, for example, the horizontally placed terminal is used as the input equipment of the terminal with an upright vertical screen (or an upright horizontal screen).

In the above-mentioned technical solution, preferably, the control unit 104 includes: a judging subunit 1042, configured to judge whether the distance between the terminal 100 and the other terminals is smaller than or equal to a preset distance, and if so, notify the state parameter acquisition unit 102 to acquire the state parameter of the terminal 100.

In the technical solution, the distance between the terminals is detected, and when the distance between the terminals is smaller than or equal to the preset distance, the state parameter of the terminal is acquired, in order to send the connection request when the state parameter satisfies the preset condition (the first preset condition or the second preset condition), which ensures the terminal to automatically acquire the state parameter when satisfying a certain distance, and the complex operation of the user for manually opening a state acquisition module and selecting and acquiring the state parameter of the terminal is not needed, so that the terminal masters the opportunity of acquiring the state parameter more accurately, and the operation of the user is facilitated. For example, the user sets to acquire the state parameter of the terminal when the distance between the terminals is within 5cm, then when detecting that the distance between two terminals is smaller than or equal to 5cm, the terminal automatically opens the state acquisition module to acquire the state parameter of the terminal, so as to judge whether the terminal satisfies the condition.

In the above-mentioned technical solution, preferably, the control unit 104 is further configured to send the connection request to the other terminals, when determining that the terminal 100 can serve as the output equipment of the other terminals according to the state parameter of the terminal 100 and the terminal 100 starts an application needing to carry out input operation.

In the technical solution, when judging that the state parameter of the terminal satisfies the condition of serving as the output equipment of other terminals and the terminal starts the application needing to carry out the input operation, the connection request is sent to the other terminals, so that the terminal can judge the opportunity of sending the connection request more accurately, in order to prevent the terminal from sending the connection request to the other terminals for multiple times to cause electricity loss of the terminal, when needing not to carry out the input operation, namely, needing not to serve the other terminals as the input equipment.

In the above-mentioned technical solution, preferably, the control unit 104 is further configured to, after the terminal 100 establishes the connection with the other terminals, and when the terminal 100 serves as the output equipment, if the terminal 100 starts the application needing to carry out the input operation, send a control command to the other terminals to enable the other terminals to start an input method application after receiving the control command, and when the terminal 100 serves as the input equipment, start the input method application according to the control command of the other terminals; the terminal 100 further includes: a display unit 106, configured to display an edit interface in full screen and display the input data from the other terminals in the edit interface when the terminal 100 serves as the output equipment, and display an input method interface in full screen when the terminal 100 serves as the input equipment.

If needing to carry out the input operation, the terminal serving as the output equipment sends the control command to the terminal serving as the input equipment, and after receiving the control command, the terminal serving as the input equipment starts the input method application for inputting. If the terminal serving as the input equipment is provided with a display screen, the terminal serving as the input equipment can display the input method interface on the display screen in full screen, for enabling the user to touch a corresponding input identifier.

The terminal sending the control command can display the current application in full screen, and since the input method interface is not displayed, more contents can be displayed on the current interface to enable the user to control the input contents and the application contents. When displaying the current application in full screen, the attribute of the interface can be readjusted to obtain a better display effect, the current interface can also be directly amplified in a preset proportion, and the input method interface can also be not included before directly displaying the input method interface without processing the same.

In the above-mentioned technical solution, preferably, the control unit 104 is further configured to, after the terminal 100 establishes the connection with the other terminals, and when the terminal 100 serves as the output equipment, if the terminal 100 starts the application needing to carry out the input operation, send an input control data packet in the started application to the other terminals to enable the other terminals to start an input control interface corresponding to the started application in full screen according to the input control data packet; the terminal 100 further includes: a display unit 106, configured to display an application interface in full screen when the terminal 100 serves as the output equipment, and display an input control interface corresponding to the application started by the other terminals in full screen according to the input control data packet from the other terminal for the input of the user, when the terminal 100 serves as the input equipment.

When the terminal serving as the input equipment in the two terminals is not equipped with a corresponding input program, when the terminal serving as the output equipment needs to carry out the input operation, a corresponding input control data packet can be sent to the terminal serving as the input equipment, for enabling the terminal serving as the input equipment to input according to the received input control data packet. For example, the terminal serving as the output equipment opens a game application, then the input control data packet corresponding to the game application can be sent to the terminal serving as the input equipment, and after receiving the input control data packet, the terminal serving as the input equipment generates and displays a control handle to carry out input control on a game in the other terminal.

Fig. 2 shows a flowchart of an input method according to an embodiment of the present invention.

As shown in Fig. 2, the input method according to the embodiment of the present invention includes: step 202, acquiring a state parameter of a terminal; step 204, judging whether the terminal satisfies a condition of serving as input equipment or output equipment of other terminals according to the state parameter of the terminal; if so, establishing a connection between the terminal and the other terminals, and the terminal serves as the input equipment or the output equipment to carry out data interaction with the other terminals.

By acquiring the state parameter of the terminal, the terminal can automatically distribute the role (namely, serving as the input equipment or output equipment of other terminals) according to the state parameter per se, and thus the complex operation of manually setting the terminal role of a user is avoided.

When the state parameter of the terminal satisfies the condition of serving as the input equipment or output equipment of other terminals, a connection request is sent to other terminals to avoid blind connection between the terminals, the connection between the terminals is only requested to be established only if necessary, and once corresponding conditions are satisfied, the connection is automatically established without any operation of the user, so that the matching process is more intelligent and the operation is more convenient.

After the connection between the terminals is established, the terminal serves as the input equipment or output equipment of other terminals, which solves the problem of inconvenient touch or unclear display resulting from a too small or too large screen of the terminal (when the screen is too small, inaccurate touch and unclear display are liable to induce, and when the screen is too large, one-hand operation is inconvenient for input), so that the operation of the user is facilitated, the input efficiency is improved and the display effect is improved as well. When detecting that the state parameter satisfies the condition, the terminal can also pop up a window or prompt the user to determine whether serving the terminal as the input equipment of other terminals or serving other terminals as the input equipment of the terminal in other manners, so as to avoid misoperation. The terminal serving as the input equipment can be a terminal with a display screen, for example, a mobile phone, a PC or the like, and can also be a terminal without a display screen, for example, a keyboard, a gamepad or the like.

It should be understood that, the terminal and the other terminals in the embodiment can be two terminals and can also be a plurality of terminals.

In the above-mentioned technical solution, preferably, when receiving the connection request from the other terminals, judging whether the terminal satisfies the condition of serving as the input equipment or output equipment of the other terminals according to the state parameter of the terminal; if so, sending a response instruction to the other terminals to establish the connection between the terminal and the other terminals.

In the technical solution, the terminal can not only send the connection request to the other terminals, but also can receive the connection request from the other terminals and send the response instruction to the terminals sending the connection request when judging that the state parameter per se can establish a connection relationship with the terminals sending the connection request, so as to establish the connection relationship with the other terminals, in this way, even if the other terminals initiate the connection request, if the terminal does not satisfy corresponding state parameter, namely, the state parameters of the two terminals are not matched, the connection between the two terminals still cannot be successfully established, only when one of the requested terminal and the request terminal can serve as the input equipment and the other can serve as the output equipment, the connection between the two terminals can be established, and when a function of automatically establishing the connection between the two terminals is provided, the successful connection establishment condition is also limited to improve the intelligence of the terminal.

In the above-mentioned technical solution, preferably, when the state parameter of the terminal satisfies a first preset condition, determining the terminal to serve as the input equipment of the other terminals; when the state parameter of the terminal satisfies a second preset condition, determining the terminal to serve as the output equipment of the other terminals.

In the technical solution, the preset condition is a preset state parameter of the terminal, for example, the first preset condition can be that the terminal is placed horizontally, and the second preset condition can be that the terminal is placed vertically.

Preferably, when the state parameters of the two terminals satisfy the first preset condition and the second preset condition respectively, the two terminals can be deemed as matched terminals, one terminal is used as an extended screen of the other terminal, the other terminal is used as extended input equipment of one terminal, and by judging the state parameters of the two terminals, the judgment of one terminal serving as the input equipment of the other terminal is more accurate. Further, after determining one terminal to serve as the input equipment of the other terminal, if the other terminal does not open an edit interface, then the terminal serving as the input equipment can continue to process the real-time process per se, halt to process the real-time process when receiving an edit command sent by the other terminal to carry out corresponding input operation, and continue to process the foregoing real-time process after finishing the input operation.

In the above-mentioned technical solution, preferably, the input method further includes: after the terminal establishes the connection with the other terminals, if detecting that the state parameter of the terminal does not satisfy the first preset condition or the second preset condition, disconnecting the connection between the terminal and the other terminals.

The state parameter of the terminal is detected in real time, and the connection between the terminals is disconnected in the case that the state parameter does not satisfy the preset condition, so that the user can change the state of the terminal to make the terminal automatically disconnect the connection after inputting, and the user does not need to manually set to disconnect the connection, and thus the operation of the user is facilitated. Of course, when the state parameter of the terminal changes greatly, the user can also be prompted of the change of the state parameter of the terminal, and if the user does not need to disconnect the connection, the user can adjust the state of the terminal to keep the connection between the terminals, so as to avoid connection interruption caused by misoperation of influencing the input of the user.

In the above-mentioned technical solution, preferably, the state parameter includes a gravity parameter of the terminal.

In the technical solution, the terminal serving as the input equipment can be determined by detecting the gravity parameter of the terminal. Specifically, when the terminal is placed in different manners, the gravity coordinate thereof is different, so that the terminal serving as the input equipment can be determined by detecting the gravity coordinate, for example, the horizontally placed terminal is used as the input equipment of the terminal with an upright vertical screen (or an upright horizontal screen).

In the above-mentioned technical solution, preferably, the input method further includes: judging whether the distance between the terminal and the other terminals is smaller than or equal to a preset distance, and if so, acquiring the state parameter of the terminal.

In the technical solution, the distance between the terminals is detected, and when the distance between the terminals is smaller than or equal to the preset distance, the state parameter of the terminal is acquired, in order to send the connection request when the state parameter satisfies the preset condition (the first preset condition or the second preset condition), which ensures the terminal to automatically acquire the state parameter when satisfying a certain distance, and the complex operation of the user for manually opening a state acquisition module and selecting and acquiring the state parameter of the terminal is not needed, so that the terminal masters the opportunity of acquiring the state parameter more accurately, and the operation of the user is facilitated. For example, the user sets to acquire the state parameter of the terminal when the distance between the terminals is within 5cm, then when detecting that the distance between two terminals is smaller than or equal to 5cm, the terminal automatically opens the state acquisition module to acquire the state parameter of the terminal, so as to judge whether the terminal satisfies the condition.

In the above-mentioned technical solution, preferably, when determining that the terminal can serve as the output equipment of the other terminals according to the state parameter of the terminal and the terminal starts an application needing to carry out input operation, sending the connection request to the other terminals.

In the technical solution, when judging that the state parameter of the terminal satisfies the condition of serving as the output equipment of other terminals and the terminal starts the application needing to carry out the input operation, the connection request is sent to the other terminals, so that the terminal can judge the opportunity of sending the connection request more accurately, in order to prevent the terminal from sending the connection request to the other terminals for multiple times to cause electricity loss of the terminal, when needing not to carry out the input operation, namely, needing not to serve the other terminals as the input equipment.

In the above-mentioned technical solution, preferably, the input method further includes: after the terminal establishes the connection with the other terminals, and when the terminal serves as the output equipment, if the terminal starts the application needing to carry out the input operation, sending a control command to the other terminals, displaying an application interface in full screen, and displaying input data from the other terminals in the application interface; when the terminal serves as the input equipment, starting an input method application according to the control command from the other terminals, and displaying an input method interface in full screen.

In two matched terminals which have established the connection, if needing to carry out the input operation, the terminal serving as the output equipment sends the control command to the terminal serving as the input equipment, and after receiving the control command, the terminal serving as the input equipment starts the input method application for inputting. If the terminal serving as the input equipment is provided with a display screen, the terminal serving as the input equipment can display the input method interface on the display screen in full screen, for enabling the user to touch a corresponding input identifier.

The terminal sending the control command can display the current application in full screen, and since the input method interface is not displayed, more contents can be displayed on the current interface to enable the user to control the input contents and the application contents. When displaying the current application in full screen, the attribute of the interface can be readjusted to obtain a better display effect, the current interface can also be directly amplified in a preset proportion, and the input method interface can also be not included before directly displaying the input method interface without processing the same.

In the above-mentioned technical solution, preferably, after the terminal establishes the connection with the other terminals, and when the terminal serves as the output equipment, if the terminal starts the application needing to carry out the input operation, sending an input control data packet in the started application to the other terminals and displaying the application interface in full screen; after the terminal establishes the connection with the other terminals, and when the terminal serves as the input equipment, displaying an input control interface corresponding to the started application in full screen according to the input control data packet from the other terminals, and transmitting the input data of the user to the terminal for displaying. When the terminal serving as the input equipment in the two terminals is not equipped with a corresponding input program, when the terminal serving as the output equipment needs to carry out the input operation, a corresponding input control data packet can be sent to the terminal serving as the input equipment, for enabling the terminal serving as the input equipment to input according to the received input control data packet. For example, the terminal serving as the output equipment opens a game application, then the input control data packet corresponding to the game application can be sent to the terminal serving as the input equipment, and after receiving the input control data packet, the terminal serving as the input equipment generates and displays a control handle to carry out input control on a game in the other terminal.

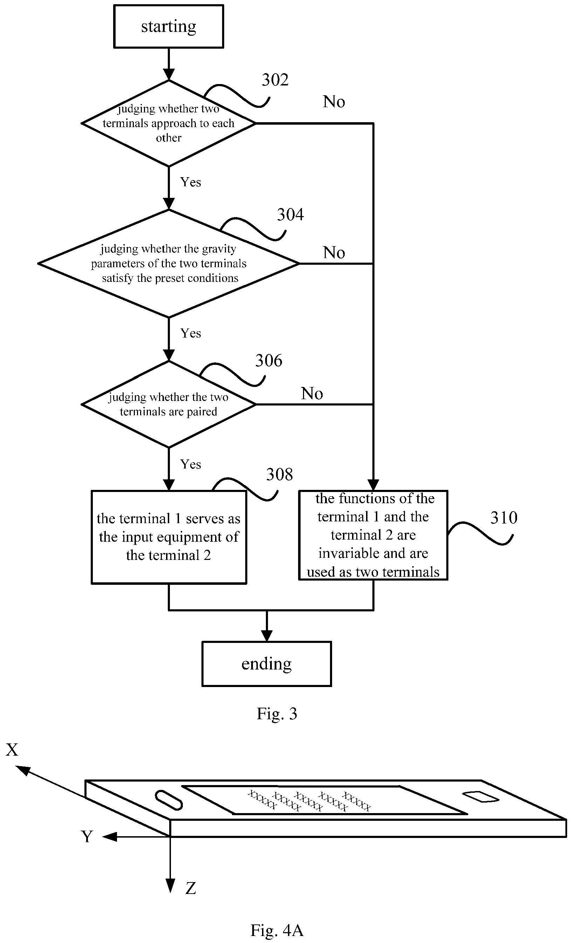

Fig. 3 shows a flowchart of an input method according to another embodiment of the present invention.

As shown in Fig. 3, the input method according to another embodiment of the present invention includes:
step 302, judging whether two terminals approach to each other, if so, executing step 304, and otherwise, executing step 310; a distance threshold can be set, and whether the two terminals approach to each other is determined through the distance threshold.

Step 304, when the distance between the two terminals is smaller than or equal to the above-mentioned threshold, acquiring state parameters of the terminals, wherein each terminal detects the state parameter per se, for example, detecting a gravity parameter, the gravity parameter contains gravity component parameters on various coordinate directions, whether the gravity parameters of the two terminals conform to corresponding preset conditions, namely, whether the gravity parameter of the terminal 1 conforms to a first preset condition, is judged, if so, a connection request is sent to the terminal 2, and when the terminal 2 receives the connection request and judges that the gravity parameter per se satisfies a second preset condition, the terminal 2 sends a response command to the terminal 1; or whether the gravity parameter of the terminal 1 conforms to the second preset condition is judged, if so, the connection request is sent to the terminal 2, and when the terminal 2 receives the connection request and judges that the gravity parameter per se satisfies the first preset condition, the terminal 2 sends the response command to the terminal 1. When judging that the gravity parameters of the two terminals conform to the preset conditions respectively, executing step 306, and otherwise, executing step 310.

Step 306, judging whether the two terminals are paired, namely, whether serving the terminal 1 as the input equipment of the terminal 2 or whether serving the terminal 2 as the input equipment of the terminal 1 (a prompt can be provided for the user to select); if so, executing step 308, and otherwise, executing step 310.

Step 308, when the gravity parameter of the terminal 1 conforms to the first preset condition and the gravity parameter of the terminal 2 conforms to the second preset condition, and determining that the two terminals are paired, the terminal 1 serves as the input equipment of the terminal 2, and when needing to input, the terminal 2 carries out the input operation through the terminal 1; of course, when the gravity parameter of the terminal 1 conforms to the second preset condition and the gravity parameter of the terminal 2 conforms to the first preset condition, and determining that the two terminals are paired, the terminal 2 serves as the input equipment of the terminal 1, and when needing to input, the terminal 1 carries out the input operation through the terminal 2.

Step 310, under the condition that the distance between the two terminals does not satisfy the distance threshold and/or the gravity parameters of the two terminals do not satisfy the preset conditions and/or when judging that the two terminals are not paired, the functions of the terminal 1 and the terminal 2 are invariable and are used as two terminals.

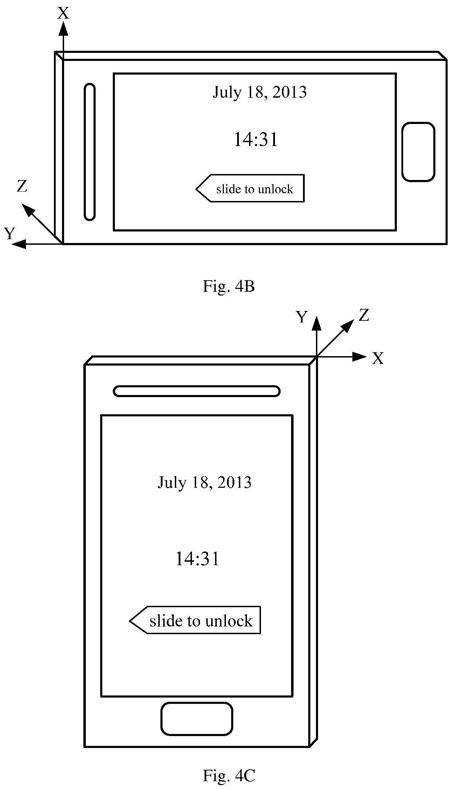

In the embodiment, whether the gravity parameter satisfies the preset condition can be determined according to the gravity coordinate of the terminal. Specifically, as shown in Fig. 4A, a screen terminal is placed horizontally upwards, a coordinate system is established with a downward direction of the screen as a Z axis positive direction, and straight lines where the other two sides are located as X axis and Y axis, then when the screen terminal is placed horizontally upwards, the gravity of the terminal is (0, 0, 10); as shown in Fig. 4B, in the case of an edge-on horizontal screen, the gravity of the terminal is (10, 0, 0); as shown in Fig. 4C, in the case of an edge-on vertical screen, the gravity of the terminal is (0, 10, 0). By detecting the components of the gravity of the terminal on various directions, the gravity parameter of the terminal is determined to determine whether the terminal satisfies the preset condition. Of course, the coordinate system can also be established in other manners to determine the gravity coordinate of the terminal, but it should be understood that all the contents shall fall within the protection scope of the present application.

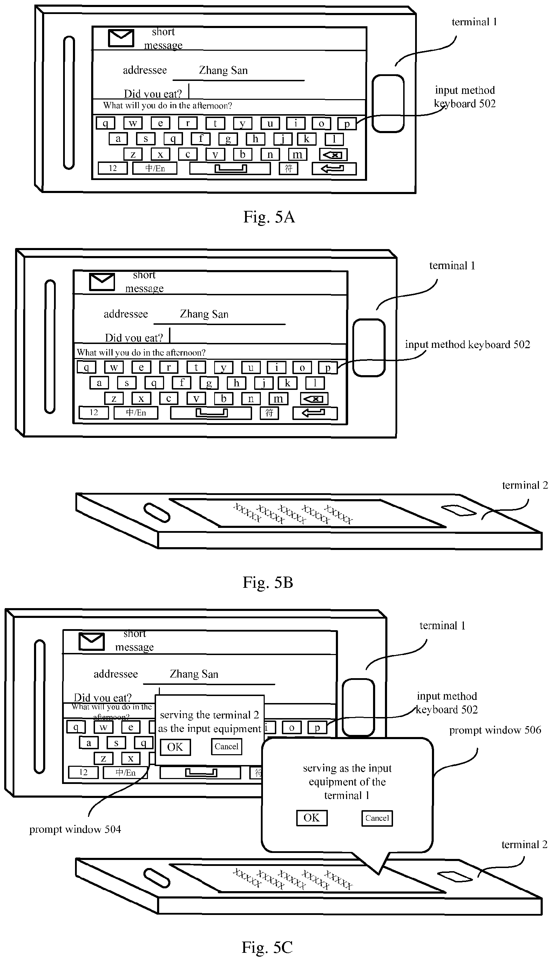

The technical solutions of the embodiment of the present invention will be illustrated below in detail in combination with Fig. 5A to Fig. 5D.

Fig. 5A to Fig. 5D show schematic diagrams of a display interface of a terminal according to an embodiment of the present invention.

As shown in Fig. 5A, the terminal 1 is editing a short message interface, and an input method keyboard 502 is displayed on the short message edit interface of the terminal. As shown in Fig. 5B, when the distance between the terminal 1 and the terminal 2 is smaller than or equal to the preset distance, the terminal 1 and the terminal 2 respectively acquire the gravity parameters thereof and send the connection request to the other terminals, when the gravity parameters of the terminals satisfy the conditions of serving as the input equipment or output equipment of the other terminals. Specifically, when satisfying the second preset condition, the terminal 1 sends the connection request to the terminal 2, and when receiving the connection request and judging that the gravity parameter per se satisfies the first preset condition (namely, a state condition of serving as the input equipment), the terminal 2 sends the response command to the terminal 1. When satisfying the first preset condition (namely, the state condition of serving as the input equipment), the terminal 1 sends the connection request to the terminal 2, and when receiving the connection request and judging that the gravity parameter per se satisfies the second preset condition, the terminal 2 sends the response command to the terminal 1.

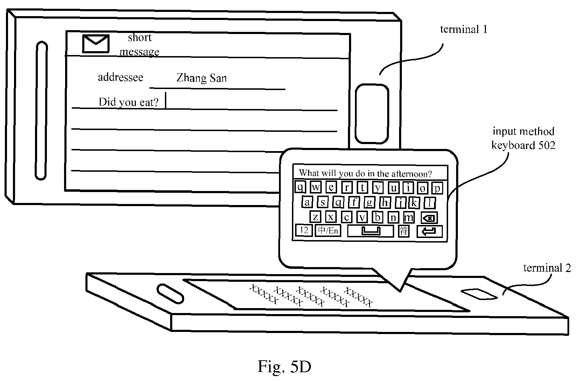

It should be understood that, besides judging whether the distance between the two terminals is within the preset distance, under the condition of satisfying the preset distance, whether one terminal needs to carry out input operation can be further judged, and if so, the connection request is sent to the other terminal, namely, unnecessary power consumption is reduced as much as possible on the condition of guaranteeing to send the connection request under scenarios required by the terminal. As shown in Fig. 5C, the terminal 2 satisfies the first preset condition, namely, the screen of the terminal shown in the figure is located at the upper side and is horizontally placed, the terminal 1 satisfies the second preset condition, namely, the screen of the terminal shown in the figure is located on the side and is edge-on or vertically placed, after receiving the response command sent by the terminal 2, a prompt window 504 pops up on the screen of the terminal 1 to prompt whether serving the terminal 2 as the input equipment, and a prompt window 506 pops up on the screen of the terminal 2 to prompt whether serving as the input equipment of the terminal 1, and when both of the terminal 1 and the terminal 2 select "Yes", the terminal 2 serves as the input equipment of the terminal 1 to establish a connection. As shown in Fig. 5D, under the condition that the terminal 2 serves as the input equipment of the terminal 1, the terminal 1 can send the control command to the terminal 2, the terminal 2 receives the control command sent by the terminal 1 and starts the input method keyboard 502, only input information contents are displayed on the terminal 1, the input method keyboard is not displayed, since the input method keyboard is displayed in full, when the terminal 2 serves as the input equipment of the terminal 1, the user can accurately touch functional identifiers on the input method keyboard 502 to improve the input efficiency, and the terminal 1 can also overcome the defect that the display area of the terminal is limited, a sufficient display space is used for displaying necessary information, and as shown in Fig. 5D, the display screen of the terminal 2 is completely used for displaying the edit interface and input characters, so that the display contents are clearer.

The terminal 1 can further send an input control data packet to the terminal 2, for enabling the terminal 2 to generate an input control interface according to the received input control data packet and input on the input control interface. For example, if the terminal 1 opens a game application, but the game application is not installed in the terminal 2, then the terminal 1 can send the input control data packet in the game application to the terminal 2, the terminal 2 generates a control handle or a control disk according to the received input control data packet, and the user input data received by the terminal 2 are transmitted to the terminal 1 for controlling the game in the terminal 1.

When the terminal 2 serves as the input equipment of the terminal 1, the working state when the terminal 1 and the terminal 2 cooperate with each other has been described above in detail, it should be understood that, when the terminal 1 serves as the input equipment of the terminal 2, the working state when the two terminals cooperate with each other is similar, and will not be repeated redundantly herein.

According to the embodiment of the present invention, a program product (not shown in the figures) stored on a non-volatile machine readable medium is further provided, which is used for input control. The program product includes a machine executable instruction used for driving a computer system to execute the following steps: acquiring a state parameter of a terminal; when determining that the terminal can serve as input equipment or output equipment of other terminals according to the state parameter of the terminal, sending a connection request to the other terminals, when receiving a response instruction from the other terminals, establishing a connection between the terminal and the other terminals, and the terminal serves as the input equipment or the output equipment to carry out data interaction with the other terminals.

According to the embodiment of the present invention, a non-volatile machine readable medium (not shown in the figures) is further provided, which stores a program product used for input control. The program product includes a machine executable instruction used for driving a computer system to execute the following steps: acquiring a state parameter of a terminal; when determining that the terminal can serve as input equipment or output equipment of other terminals according to the state parameter of the terminal, sending a connection request to the other terminals, when receiving a response instruction from the other terminals, establishing a connection between the terminal and the other terminals, and the terminal serves as the input equipment or the output equipment to carry out data interaction with the other terminals.

According to the embodiment of the present invention, a machine readable program (not shown in the figures) is further provided, wherein the program is used for driving a machine to execute any input method in the above-mentioned technical solutions.

According to the embodiment of the present invention, a storage medium (not shown in the figures) storing a machine readable program is further provided, wherein the machine readable program is used for driving a machine to execute any input method in the above-mentioned technical solutions.

The technical solutions of the present invention have been described above in detail in combination with the accompanying drawings, and considering that the user is easy to make input errors due to inaccurate touch in an input process resulting from the limitation of the terminal screen, while for a terminal with an overlarge screen, the user needs to hold the terminal on one hand and input by the other hand, which may influence the input efficiency. Therefore, the present invention provides a new input solution, and by automatically matching the state parameter of the terminal, the other terminals serve as the input equipment of the terminal, so as to improve the input efficiency, reinforce the display effect and improve the user experience.

The foregoing descriptions are merely preferred embodiments of the present invention, rather than limiting the present invention. Those skilled in the art can make a variety of modifications and variations to the present invention. Any modifications, equivalent substitutions, improvements and the like made within the spirit and principle of the present invention shall fall within the protection scope of the present invention.

## Claims

1. A terminal, comprising:
a state parameter acquisition unit, configured to acquire a state parameter of the terminal;
and a control unit, configured to judge whether the terminal satisfies a condition of serving as input equipment or output equipment of other terminals according to the state parameter of the terminal, and if so, establish a connection between the terminal and the other terminals, and the terminal serves as the input equipment or the output equipment to carry out data interaction with the other terminals.

2. The terminal according to claim 1, wherein the control unit is further configured to, when receiving the connection request of the other terminals, judge whether the terminal satisfies the condition of serving as the input equipment or output equipment of the other terminals according to the state parameter of the terminal, and if so, send a response instruction to the other terminals to establish the connection between the terminal and the other terminals.

3. The terminal according to claim 1, wherein the control unit determines the terminal to serve as the input equipment of the other terminals when the state parameter of the terminal satisfies a first preset condition, and determines the terminal to serve as the output equipment of the other terminals when the state parameter of the terminal satisfies a second preset condition.

4. The terminal according to claim 3, wherein the control unit is further configured to, after the terminal establishes the connection with the other terminals, if detecting that the state parameter of the terminal does not satisfy the first preset condition or the second preset condition, disconnect the connection between the terminal and the other terminals.

5. The terminal according to claim 1, wherein the state parameter comprises a gravity parameter of the terminal.

6. The terminal according to claim 1, wherein the control unit comprises:
a judging subunit, configured to judge whether the distance between the terminal and the other terminals is smaller than or equal to a preset distance, and if so, notify the state parameter acquisition unit to acquire the state parameter of the terminal.

7. The terminal according to claim 1, wherein the control unit is further configured to send the connection request to the other terminals, when determining that the terminal can serve as the output equipment of the other terminals according to the state parameter of the terminal and the terminal starts an application needing to carry out input operation.

8. The terminal according to any of claims 1-7, wherein the control unit is further configured to, after the terminal establishes the connection with the other terminals, and when the terminal serves as the output equipment, if the terminal starts the application needing to carry out the input operation, send a control command to the other terminals to enable the other terminals to start an input method application after receiving the control command, and when the terminal serves as the input equipment, start the input method application according to the control command of the other terminals;
the terminal further comprises: a display unit, configured to display an edit interface in full screen and display input data from the other terminals in the edit interface when the terminal serves as the output equipment, and display an input method interface in full screen when the terminal serves as the input equipment.

9. The terminal according to any of claims 1-7, wherein,
the control unit is further configured to, after the terminal establishes the connection with the other terminals, and when the terminal serves as the output equipment, if the terminal starts the application needing to carry out the input operation, send an input control data packet in the started application to the other terminals to enable the other terminals to start an input control interface corresponding to the started application in full screen according to the input control data packet;
the terminal further comprises: a display unit, configured to display an application interface in full screen when the terminal serves as the output equipment, and display an input control interface corresponding to the application started by the other terminals in full screen according to the input control data packet from the other terminal for the input of the user, when the terminal serves as the input equipment.

10. An input method, comprising:
acquiring a state parameter of a terminal; and
judging whether the terminal satisfies a condition of serving as input equipment or
output equipment of other terminals according to the state parameter of the terminal;
if so, establishing a connection between the terminal and the other terminals, and the terminal serves as the input equipment or the output equipment to carry out data interaction with the other terminals.

11. The input method of claim 10, further comprising:
when receiving the connection request from the other terminals, judging whether the terminal satisfies the condition of serving as the input equipment or output equipment of the other terminals according to the state parameter of the terminal;
if so, sending a response instruction to the other terminals to establish the connection between the terminal and the other terminals.

12. The input method of claim 10, wherein when the state parameter of the terminal satisfies a first preset condition, determining the terminal to serve as the input equipment of the other terminals;
when the state parameter of the terminal satisfies a second preset condition, determining the terminal to serve as the output equipment of the other terminals.

13. The input method of claim 12, further comprising:
after the terminal establishes the connection with the other terminals, if detecting that the state parameter of the terminal does not satisfy the first preset condition or the second preset condition, disconnecting the connection between the terminal and the other terminals.

14. The input method of claim 10, wherein the state parameter comprises a gravity parameter of the terminal.

15. The input method of claim 10, further comprising:
judging whether the distance between the terminal and the other terminals is smaller than or equal to a preset distance, and if so, acquiring the state parameter of the terminal.

16. The input method of claim 10, wherein when determining that the terminal can serve as the output equipment of the other terminals according to the state parameter of the terminal and the terminal starts an application needing to carry out input operation, sending the connection request to the other terminals.

17. The input method of any of claims 10-16, further comprising:
after the terminal establishes the connection with the other terminals, and when the terminal serves as the output equipment, if the terminal starts the application needing to carry out the input operation, sending a control command to the other terminals,
displaying an application interface in full screen, and displaying input data from the other terminals in the application interface; and
when the terminal serves as the input equipment, starting an input method application according to the control command from the other terminals, and displaying an input method interface in full screen.

18. The input method of any of claims 10-16, wherein,
after the terminal establishes the connection with the other terminals, and when the terminal serves as the output equipment,
if the terminal starts the application needing to carry out the input operation, sending an input control data packet in the started application to the other terminals and displaying the application interface in full screen;
after the terminal establishes the connection with the other terminals, and when the terminal serves as the input equipment,
displaying an input control interface corresponding to the started application in full screen according to the input control data packet from the other terminals, and transmitting the input data of the user to the terminal for displaying.
